# EUROPÄISCHE PATENTSCHRIFT

(11) **EP 4 354 803 B1**
(45) Veröffentlichungstag und Bekanntmachung des Hinweises auf die Patenterteilung: **05.08.2026**
(21) Anmeldenummer: 23198094.7
(22) Anmeldetag: 18.09.2023
(51) Int. Cl.: H04L 12/10

(54) **VERFAHREN UND VERSCHALTUNG ZUM BETRIEB EINES NETZWERKS ODER NETZWERKABSCHNITTS**
METHOD AND CIRCUIT FOR OPERATING A NETWORK OR NETWORK SECTION
PROCÉDÉ ET CIRCUIT POUR FAIRE FONCTIONNER UN RÉSEAU OU UNE SECTION DE RÉSEAU

(30) Priorität: 14.10.2022 DE 102022126893
(43) Veröffentlichungstag der Anmeldung: 17.04.2024
(73) Patentinhaber: Turck Holding GmbH, 58553 Halver (DE)
(72) Erfinder: vom Stein, Johannes, 42499 Hückeswagen (DE)
(74) Vertreter: DTS Patent- und Rechtsanwälte PartmbB

(56) Entgegenhaltungen:
- US-A1- 2008 238 447
- US-A1- 2009 168 462
- US-A1- 2015 126 251
- US-A1- 2018 019 884
- US-A1- 2019 229 934
- US-A1- 2022 329 449

## Beschreibung

Die vorliegende Erfindung betrifft ein Powered Device (PD) nach dem Oberbegriff des Anspruchs 1.

Mit SPE (Single Pair Ethernet) bzw. APL (Advanced Physical Layer) ist es grundsätzlich möglich, ein funktional sicheres Protokoll (z.B. PROFIsafe, CIPP Safety) zu übermitteln. Die Übertragungsstrecke wird dabei als "schwarzer Kanal" genutzt, wobei sichere Pakete über einen unsicheren Weg versandt werden.

Die US 2017/0302508 A1 offenbart ein Betriebsverfahren eines ersten Kommunikationsknotens in einem Fahrzeugnetzwerk. Dieses weist auf: Messen einer Stärke eines Stroms, welcher an einen zweiten Kommunikationsknoten durch eine Datenleitung in dem Fahrzeugnetzwerk geliefert wird, Vergleichen der gemessenen Stärke des Stroms mit einem vorbestimmten Schwellwert, Erzeugen eines Adressauflösungsprotokoll-(ARP-)Rahmens, welcher eine fehlerbezogene Information aufweist, wenn basierend auf einem Ergebnis des Vergleichs ermittelt wird, dass der zweite Kommunikationsknoten in einem Fehlerzustand ist und Übertragen des ARP-Rahmens.

Weiterhin ist aus der US 2011/0047407 A1 bekannt, Redundanz von Daten und/oder Inline-Leistung in einem drahtgebundenen Datentelekommunikationsnetz von einem ersten Netzwerkgerät und einem zweiten Netzwerkgerät bereitzustellen. Diese sind als Power-Sourcing-Equipment (PSE)-Geräte konfiguriert und miteinander gekoppelt sowie mit einem dritten Netzwerkgerät (z. B. einem PD) über einen Y-Verbinder gekoppelt. Hierbei wird eine redundante Signalisierung zu/von jedem Paar von Netzwerkgeräten bereitgestellt, indem ein Port jedes der Netzwerkgeräte mit dem Y-Verbinder und von dort mit einem dritten Port gekoppelt wird, wo ein drittes Netzwerkgerät, wie etwa ein PD, gekoppelt werden kann. Da das Y-Gerät im Wesentlichen passiv ist, werden Kommunikationspfade zwischen den PSE-Geräten und dem PD bereitgestellt, um einen Master-Slave-Status, andere Status und den Austausch zugehöriger Informationen zwischen den jeweiligen Netzwerkgeräten zu ermöglichen.

In US 2022/329449 A1 wird eine filterbasierte Stromversorgungsvorrichtung, die in einer Stromversorgungseinrichtung (PSE) verwendet. Diese umfasst eine Stromversorgungssteuerschaltung und eine adaptive Filterschaltung. Der Stromversorgungs-Steuerkreis umfasst einen Stromversorgungskanal und ein Erkennungsmodul. Der Stromversorgungskanal umfasst einen Steuerschalter, der zum Ein- und Ausschalten des Stromversorgungskanals konfiguriert ist. Das Erkennungsmodul ist so konfiguriert, dass es ein Erkennungssignal an den Stromversorgungskanal sendet, um zu erkennen, ob ein an den Stromversorgungskanal angeschlossenes Peer-Gerät ein gültiges mit Strom versorgtes Gerät ist. Bei einem Erkennungsvorgang des Stromversorgungskanals wird der Steuerschalter ausgeschaltet. Die adaptive Filterschaltung ist dazu konfiguriert, im Erkennungsprozess des Stromversorgungskanals Rauschen im Erkennungssignal zu filtern.

In US 2009/0168462 A1 umfasst eine Schaltungsvorrichtung eine Netzwerkschnittstelle, die auf ein mit Strom versorgtes Netzwerk reagiert, um eine Stromversorgung und Daten zu empfangen, und umfasst eine elektrische Isolationsbarriere, die angepasst ist, um einen nicht isolierten Strombereich und einen isolierten Strombereich zu definieren. Die Schaltungsvorrichtung umfasst außerdem eine erste Steuerschaltung, die mit der nicht isolierten Leistungsdomäne verbunden ist. Die erste Steuerschaltung ist mit einer Primärwicklung eines Transformators gekoppelt, um den Stromfluss über die Primärwicklung zu steuern. Die Schaltungsvorrichtung umfasst außerdem eine zweite Steuerschaltung, die mit der isolierten Leistungsdomäne verbunden ist. Die zweite Steuerschaltung ist mit einer Sekundärwicklung des Transformators gekoppelt und erkennt einen mit der Sekundärwicklung verbundenen Leistungsfehler. Der zweite Steuerschaltkreis überträgt einen Befehl über die elektrische Isolationsbarriere an den ersten Steuerschaltkreis, um als Reaktion auf die Erkennung des Stromfehlers einen Strom an der Primärwicklung anzupassen.

Hauptnachteil dieser Lösungen ist, dass entweder die Zustandsdaten des PD nur diskontinuierlich gesendet werden oder die Logik-Verarbeitung auch mit hohem Sicherheitslevel durchgeführt werden muss. Dafür sind aufwändige Strukturen nötig, wie beispielsweise redundante Mikroprozessoren. Die sichere Übertragung einer digitalen Information bedarf somit eines hohen Aufwandes in Hard- und Software, insbesondere wenn der sichere Zustand vom PD an das PSE berichtet werden muss.

Es ist die Aufgabe der vorliegenden Erfindung, ein Powered Device (PD) und ein zugehöriges Verfahren zum Betrieb eines mit einem Power Sourcing Equipment (PSE) verbundenen PD in einem Netzwerk vorzuschlagen, welches eine höhere Sicherheit (Sicherheitslevel) aufweist, um sichere Aussagen über die Datenintegrität und einen sicheren Sicherheitszustand zu tätigen.

Diese Aufgabe wird erfindungsgemäß gelöst durch ein PD nach den Merkmalen des Anspruchs 1. Vorteilhafte Ausgestaltungen sind in den jeweiligen, zugehörigen Unteransprüchen angegeben.

Danach wird die Aufgabe gelöst durch ein PD (Powered Device) zur Verbindung mit einem Power Sourcing Equipment (PSE) über eine Netzwerkleitung eines Netzwerkes. Das PD weist folgende elektronische Bauteile auf:
- einen Koppler zur Verbindung mit dem PSE und zur Trennung von über die Netzwerkleitung empfangene Versorgung und Kommunikation,
- mindestens eine Logikeinheit und mindestens zwei Eingangskanäle, wobei der Koppler zwei PSE-Ports und mindestens vier PD-Ports aufweist, wovon mind. zwei PD-Ports Leistungsports darstellen und mind. zwei PD-Ports Kommunikationsports darstellen und wobei die elektronischen Bauteile über die zwei Leistungsports und die Versorgungsleitung direkt oder mittelbar versorgt werden. Hierbei ist eine Schalteinheit in der Versorgungsleitung vom Koppler zu dem mindestens einen Eingangskanal angeordnet und von der Schalteinheit führt ein Versorgungszweig zu der Logikeinheit, wobei die Logikeinheit einen Versorgungsspeicher umfasst und/oder hiermit verbunden ist.

Das PD ist vorliegend nicht eingeschränkt und kann beispielsweise ein IO-Modul, ein kombiniertes Device mit Ausgang und Eingang, ein Schütz mit Rückmeldekontakt, ein Motor mit Grenzschalter, ein Ventil mit Rückmeldung der Stellung, eine Türverriegelung mit Rückmeldung etc. sein.

Der Koppler ist hierbei derart ausgestaltet, dass dieser die elektrische Versorgung und die digitale Kommunikation durch passive Bauelemente ermöglicht, indem diese kommend von dem PSE getrennt und die Leistungsports und die Kommunikationsports des PD zur jeweils angeschlossenen Leitung geleitet werden. In der umgekehrten Richtung werden die Versorgung und die Kommunikation zusammengeführt und an das PSE geleitet. Vorteilhafterweise weist der Koppler hierzu einen Hochpass-Filter (high-pass filter) für die Kommunikation bzw. das Kommunikationssignal auf und einen Tiefpass-Filter (low-pass filter) für die Versorgung. Der Koppler kann beispielsweise in einer vorteilhaften Ausführungsform nach dem IEEE 802.3cg:2019 Standard ausgebildet sein.

Das Netzwerk und die zugehörigen Netzwerkleitung ist vorteilhafterweise eine SPE mit PoDL (Power over Data Line) und nach einem der IEEE 802.3 Standards oder einem vergleichbaren oder abgeleiteten Standard ausgebildet, wie einem der IEC 61156 Standards.

Vorliegend soll unter "Versorgung" immer die Strom- und/oder Spannungsversorgung verstanden werden, wenn nicht etwas Unterschiedliches ausgeführt wird. Im Unterschied hierzu soll unter "Kommunikation" jegliche Form der Datenübermittlung (Versand und Empfang) verstanden werden. Unter Kommunikation soll insbesondere auch das Steuern und Regeln von elektronischen Bauteilen umfasst sein, insbesondere das Steuern und Regeln von elektronischen Bauteilen durch die Logikeinheit. Weiter wird unter "Kommunikation" auch ein digitales Signal verstanden, das nur einen Zustand eines elektrischen oder elektronischen Bauteils übermittelt, wie zum Beispiel
- ein Strom(-fluss) ober- oder unterhalb einer Schwelle, hier beispielsweise einer Versorgungsmesseinheit an eine Schalteinheit oder eine Logikeinheit,
- ein Eingang(-skanal) oder Ausgang(-skanal) beschaltet oder nicht beschaltet oder
- eine Lasteinheit oder Last, die zu- oder abgeschaltet wurde, hier beispielsweise von einer Lasteinheit, wie einem Widerstand oder einem Verbraucher zu der Schalteinheit und/oder einer Logikeinheit.

Nachfolgend soll unter einem "Null-Puls" der Schalteinheit und/oder eines dortigen Schalters verstanden werden, dass die Schalteinheit die Versorgungsleitung (ab)trennt, also der Schalter schaltet, so dass die die Logikeinheit und bedarfsweise auch der Versorgungseingangskanal hiervon getrennt sind.

Unter "Last-Puls" der Schalteinheit soll eine Zuschaltung einer Lasteinheit verstanden werden, so dass der Ausgang weiter versorgt wird und der Sicherheitszustand des Eingangs durch den Puls als Charakteristik der Spannung und/oder des Stromverbrauches erzeugt wird.

Nachfolgend wird das Schalten der Schalteinheit als "Puls", worunter sowohl ein Null-Puls und auch ein Last-Puls subsummiert werden, wenn nicht ausdrücklich etwas Spezielles ausgeführt wird.

Unter einem sicheren Eingang wird ein mindestens zwei unabhängige Eingangskanäle aufweisender Eingang verstanden, die eine redundante digitale Information über den Zustand des sicheren Eingangs generieren und übermitteln, indem sie digitale Informationen zu den jeweiligen Teilzustände der mindestens zwei unabhängigen Eingangskanäle generieren und übermitteln. Wenn durch einen Fehler einer der Eingangskanäle versagt, wird der Fehler durch Vergleich der beiden Eingangskanäle erkannt und übermittelt.

Ein sicherer Ausgang besteht aus zwei Ausgangskanälen, die zwei unabhängige Abschaltmöglichkeiten darstellen. Der abgeschaltete Zustand gilt als Sicherheitszustand. Der Zustand des Ausgangs wird zurückgelesen, insbesondere von der Logikeinheit und/oder dem PSE. Wenn durch einen Fehler eine Abschaltung durch zum Beispiel das Versagen eines elektronischen Abschaltgliedes vorliegt, kann der Ausgang durch eine zweite Abschaltmöglichkeit, wie beispielsweise ein zweites elektronisches Abschaltglied abgeschaltet werden.

Vorliegend wird der "erste Eingangskanal" synonym auch als "Versorgungseingangskanal" bezeichnet und der "zweite Eingangskanal" synonym auch als "Kommunikationseingangskanal".

Bei einer vorteilhaften Ausführungsform erfolgt die vollständige Versorgung über die Versorgungsleitung, von der elektrische und elektronische Bauteile direkt oder mittelbar versorgt werden. Hierbei meint direkte Versorgung, dass ein Bauteil ohne ein dazwischen angeordnetes elektronisches Bauteil mit der Versorgungsleitung verbunden und hierüber versorgt wird, wobei die direkte Versorgung auch über einen Leitungsknoten erfolgen kann. Die indirekte Versorgung meint jedes sonstige Versorgen, insbesondere die Versorgung über ein filterndes, verstärkendes und/oder abschwächendes elektronische Bauteil und/oder die Versorgung über ein elektrisches Speicherelement.

Bei einer vorteilhaften Ausführungsform ist innerhalb des PD die Versorgung vollständig von der Kommunikation getrennt und erfolgt über getrennte Leitungen bzw. getrennte Adern.

Die Logikeinheit ist ein- oder mehrteilig aufgebaut und versorgt bei einer vorteilhaften Ausführungsform kommunikativ eine Mehrzahl elektronischer Bauteile des PD**,** insbesondere alle elektronischen Bauteile des PD. Hierzu umfasst und/oder nutzt die Logikeinheit ein oder mehrere entsprechende Softwareprogramme.

Die Logikeinheit umfasst vorteilhafterweise mindestens einen Microcontroller, der ausgebildet ist und/oder entsprechende Software nutzt, um ein Kommunikationsprotokoll auszuwerten, das mindestens eine Information über einen Sicherheitszustand beinhaltet, die insbesondere redundant auf einem anderen Kanal übermittelt werden kann. Die Logikeinheit liest hierbei insbesondere einen Eingang, insbesondere einen sicheren Eingangskanal. Weiterhin kann die Logikeinheit einen Ausgang, insbesondere einen sicheren Ausgangskanal steuern.

Vorteilhafterweise kann die Logikeinheit über Kommunikationsleitungen mit mehreren, insbesondere mit allen Bauteilen des PD verbunden sein, um in mindestens einem Diagnoseschritt deren Zustand und/oder relevante Betriebs- und/oder Leistungsdaten zu erfassen. Hierzu umfasst die Logikeinheit vorteilhafterweise weitere, nicht sicherheitsrelevante digitale oder analoge Eingänge, Ausgänge oder sonstige funktionale Blöcke.

Auf diese Weise kann im PSE der sichere Eingangszustand in dem ersten Sicherheitskanal, dem Versorgungssicherheitskanal, über die Versorgungsleitung erfasst und überprüft werden.

Eine hohe Diversität der beiden Sicherheitskanäle wird dadurch erreicht, dass die Sicherheitsfunktion des Versorgungssicherheitskanals (Versorgung) nicht von der Hard- oder Softwarekomponente in der Logikeinheit des Kommunikationssicherheitskanals (Kommunikation) abhängig ist.

Eine weitere Verbesserung kann darin bestehen, dass die Logikeinheit und/oder das PSE ausgebildet sind und/oder eine entsprechende Software umfassen, um eine charakteristische Versorgung durch eine Versorgungseinheit bzw. einen Versorgungsspeicher im Versorgungszweig zu erkennen.

Hierbei ist unter einer charakteristischen Versorgung eine Strommenge, eine Spannung und/oder deren zeitlicher Verlauf (Gradient) zu verstehen, der nicht oder mit höchster statistischer Wahrscheinlichkeit nicht zufällig erzeugt werden kann, insbesondere nicht zufällig von der Versorgungsleitung zur Verfügung gestellt werden kann.

Auf diese Weise kann das PSE zusätzlich zu dem Versorgungssicherheitskanal die Versorgung des Logikelementes durch die Versorgungseinheit über den Kommunikationssicherheitskanal erkennen, d. h. den Schaltzustand der Schalteinheit feststellen, der über den Kommunikationssicherheitskanal übermittelbar ist. Von der Logikeinheit ist dieser Sicherheitszustand des Eingangs vorteilhafterweise an mindestens einen Kommunikationsport des Kopplers und hin zum PSE übermittelbar.

Es kann ein Vorteil darin bestehen, dass die Schalteinheit mindestens eine Zeitmesseinheit und einen Schalter umfasst, idealerweise eine Zeitmesseinheit mit zwei Zeitmesselementen, wobei der Schalter gesteuert durch die Zeitmesseinheit zyklisch Pulse veranlasst. Dies können insbesondere Null-Pulse sein, wobei die Versorgungsleitung von der Logikeinheit und bedarfsweise zusätzlich von dem Versorgungseingangskanal getrennt wird. Die Zeitmesselemente mittels denen die Zeiten bemessen werden, können hierbei passive Bauteile wie Widerstände oder Kapazitäten sein und/oder Zählerbausteine sein.

Die Schalteinheit ist hierbei vorteilhafterweise derart mit mindestens einem Versorgungseingangskanal verbunden, dass diese nur einen Last-Puls veranlasst, wenn der Versorgungseingangskanal aktiv ist, insbesondere einen definierten Stromverbrauch aufweist.

Vorteilhafterweise umfasst die Schalteinheit als Schalter einen Feldeffekttransistor (FET) oder einen sonstigen Transistor oder ist also ein solches Bauteil ausgebildet.

Bei einer alternativen Ausführungsform kann vorgesehen werden, dass die Schalteinheit bedarfsweise geschaltet wird und/oder eine von der Zeitmesseinheit zyklisch geschaltete Trennung der Versorgungsleitung für eine definierte Dauer verlängert wird.

Bei einer vorteilhaften Ausführungsform ist mindestens ein Versorgungseingangskanal über die Schalteinheit von der Versorgungsleitung schaltbar, d. h. der Versorgungseingangskanal kann von der Versorgungsleitung getrennt werden. Beide Eingangskanäle erfassen jeweils ein digitales Eingangssignal, wobei die beiden Eingangssignale gemeinsam ein sicheres Eingangssignal (Sicherheitszustand) bilden, weil diese beiden Eingangssignale (Teilzustände) redundant oder eindeutig invertiert von dem PSE erfassbar sind.

Vorteilhafterweise ist ein sicheres Eingangssignal bzw. der Sicherheitszustand definiert aus den zwei Eingangssignalen von mindestens zwei Eingangskanälen, insbesondere digitalen Eingangssignalen, die in einer definierten Zeit (dt) denselben oder einen antivalenten (Teil-)Zustand aufweisen müssen. Auf diese Weise kann im PD der sichere Schaltzustand (Teilzustand) in dem ersten Sicherheitskanal, dem Versorgungssicherheitskanal, an das PSE übermittelt werden, wobei dies vollständig unabhängig von dem Logikelement erfolgt.

Weiterhin kann der sichere Teilzustand im zweiten Sicherheitskanal, dem Kommunikationssicherheitskanal, über den Kommunikationseingangskanal erfasst und über die Logikeinheit an das PSE übermittelt werden.

Eine weitere, verbesserte Ausführungsform kann darin bestehen, dass die Schalteinheit ausgebildet ist, um mindestens eine Zeitlang (dt) einen oder mehrere Pulse und/oder ein charakteristisches Pulsmuster zu veranlassen, wobei die nachgelagerten Baugruppen während des Null-Pulses nicht mit Strom versorgt werden. Hierbei kann vorteilhafterweise der Versorgungseingangskanal so gestaltet sein, dass Null-Pulse zur Querschlusserkennung eines potentialfreien Kontaktes genutzt werden, wobei die Null-Pulse zyklisch erfolgen können.

Ein vorteilhafterweise vorhandener Versorgungsausgangskanal kann derart gestaltet sein, dass Null-Pulse zur Überprüfung der Abschaltfähigkeit genutzt werden, wobei die Null-Pulse ebenfalls zyklisch erfolgen können.

Hierbei meint ein "charakteristisches Pulsmuster" eine zeitliche Abfolge von zwei oder mehr Pulsen und mindestens einer Pulspause, wobei das Pulsmuster insbesondere derart ist, dass dieses nicht zufällig entstehen kann. Dieses charakteristische Pulsmuster kann insbesondere durch die Zeitmesseinheit veranlasst werden und wird über einen Kommunikationsport des Kopplers an das PSE weitergeleitet.

Eine weitere, verbesserte Ausführungsform kann darin bestehen, dass in dem zur Logikeinheit führenden Versorgungszweig eine Versorgungseinheit angeordnet ist, die mindestens einen Versorgungsspeicher und ein Netzteil umfasst.

Das Netzteil umfasst hierbei vorteilhafterweise einen Gleichstromwandler, der die von dem Versorgungsspeicher bereitgestellte Spannung auf eine definierte, niedrigere Spannung wandelt. Hierzu kann das Netzteil eine Konstantstromsenke umfassen, über welche ein konstanter Stromverbrauch eingestellt wird.

In dem Versorgungszweig von der Schalteinheit zur Logikeinheit kann der Versorgungsspeicher vor oder hinter dem Netzteil angeordnet sein.

Eine weitere, verbesserte Ausführungsform kann darin bestehen, dass der Versorgungsspeicher mindestens ein passives Speicherbauteil und mindestens ein passives Richtungsbauteil umfasst, wobei das Speicherbauteil beispielsweise eine Kapazität und/oder eine Induktivität ist und das mindestens eine Richtungsbauteil beispielsweise eine Diode ist.

Die passiven Speicherbausteine können auch eine Gruppe von Speicherbausteinen sein, idealerweise eine Gruppe von passiven Speicherbauteilen, die eine charakteristische Versorgung oder einen charakteristischen Anstieg oder eine Abschaltung der Versorgung während eines Pulses der Schalteinheit erzeugen und die Abschaltung ausgleichen, so dass die Logikeinheit konstant weiter versorgt wird. Wie vorstehend beschrieben, kann vorgesehen sein, dass durch die Logikeinheit eine charakteristische Versorgung oder ein charakteristischer Anstieg erfassbar und auswertbar ist.

Idealerweise kann die Logikeinheit die Pulse der Schalteinheit nicht beeinflussen und wird selbst hiervon auch nicht beeinflusst. Bei einer besonders vorteilhaften Ausführungsform wird von der Schalteinheit nur die zur Logikeinheit führende Abzweigung geschaltet, während ein Versorgungsausgang und ein ggf. vorhandener Versorgungsausgang hiervon nicht geschaltet werden. Das Richtungsbauteil dient zur Festlegung der Stromrichtung und insbesondere zur Verhinderung eines Stromflusses in Richtung des Versorgungseingangskanals während eines Pulses.

Eine weitere, verbesserte Ausführungsform kann darin bestehen, dass der Versorgungsspeicher derart ausgebildet und dimensioniert ist, dass die bereitstellbare Versorgung der Höhe (Größe) und/oder der Dauer nach keinen Betrieb des Ausgangs ermöglicht, wobei hiermit der unsichere Betrieb des Ausgangs, also ein nicht abgeschalteter Betrieb gemeint ist.

Hierzu ist die Versorgung, d. h. die erforderliche Stromstärke und/oder die erforderliche Spannung vorzugsweise kleiner als 50 % der Versorgung für einen Betrieb des Ausgangs, insb. kleiner als 25 %, idealerweise kleiner als 15 %.

Eine weitere Verbesserung kann darin bestehen, dass die Speicherkapazität des Versorgungsspeichers derart dimensioniert ist, dass die gespeicherte Versorgung (Energiemenge) nur für einen Puls (Pulsdauer) und/oder ein charakteristisches Pulsmuster des Schaltelements ausreicht.

Weiterhin kann es vorteilhaft sein, dass der Versorgungsspeicher derart ausgelegt ist, dass das Wiederaufladen über die Versorgungsleitung und der parallele Betrieb der Logikeinheit möglich sind.

Eine weitere, verbesserte Ausführungsform kann darin bestehen, dass in der Versorgungsleitung zwischen dem Koppler und der Schalteinheit eine Lasteinheit vorgesehen ist, wobei die Lasteinheit mit der Schalteinheit kommuniziert und/oder von dieser gesteuert wird.

Auf diese Weise kann während des Pulses (Null-Puls) in der Versorgungsleitung, d. h. deren Trennung, eine definierte Last zwischen dem Koppler und der Schalteinheit eingeschaltet werden, deren Aktivierung vom PSE (erhöhter Stromfluss oder Widerstand) erfassbar und auswertbar ist. Idealerweise wird für die zusätzliche Lasteinheit der Strom oder die Spannung auf einen definierten Wert und/oder ein definiertes Strom- und/oder Spannungsmuster vorgesehen. Auf diesem Wege ist die Dauer des Pulses der Schalteinheit für die PSE durch den Last-Puls (erhöhter Strompuls) positiv erfassbar, was eine weitere Sicherheitsstufe darstellt.

Das PSE wertet vorteilhafterweise den ersten Teilzustand des Versorgungssicherheitskanals (erster Sicherheitskanal) aus, indem der Strom kontinuierlich gemessen wird und zyklisch auftretende Pulse unterhalb oder oberhalb einer definierten Schwelle erfasst als Maß bzw. digitale Information werden. Das Ausbleiben der zyklischen Pulse wird ebenso erfasst. Die Kommunikation mit dem PD über ein Kommunikationsprotokoll liefert dieselbe Information über den unsicheren oder sicheren Teilzustand im Kommunikationssicherheitskanal. Die redundant übermittelten Informationen der beiden Teilzustände können ausgewertet werden, ob insgesamt ein Sicherheitszustand des PD gegeben ist. Bei Unstimmigkeit kann der Sicherheitszustand generiert werden.

Vorteilhafterweise kann bei zugeschalteter Last über die Lasteinheit der unsichere oder sichere Teilzustand als Last-Puls ausgeführt werden. Dann muss der höhere Laststrom für bspw. einen Versorgungsein- oder -ausgang nicht unterbrochen werden. Bei abgeschalteter Last kann der unsichere oder sichere Teilzustand als Null-Puls ausgeführt werden.

Idealerweise wird die zusätzliche Lasteinheit kommunikativ von der Schalteinheit geschaltet, wobei eine Alternative darin besteht, dass eine Kommunikationsleitung von der Logikeinheit zur Lasteinheit besteht und statt der Versorgung der Logikeinheit durch die Versorgungseinheit die Lasteinheit geschaltet wird.

Eine weitere, verbesserte Ausführungsform kann darin bestehen, dass in der Versorgungsleitung eine Versorgungsmesseinheit vorgesehen ist, die mit der Schalteinheit kommuniziert, wobei die Schalteinheit ausgelegt sein kann, um in Abhängigkeit von dem durch die Versorgungsmesseinheit erfassten Versorgungswert, einen Null-Puls oder einen Last-Puls zu erzeugen.

Diese Ausführungsform hat den Vorteil, dass die Strom- und/oder Spannungswechsel in der Höhe limitiert sind, wodurch schneller geschaltet werden kann bzw. eine geringere Belastung für die Bauteile vorliegt.

Die Versorgungsmesseinheit ist idealerweise eine Strommessungsvorrichtung, die beispielsweise durch einen Shunt-Widerstand oder über eine magnetische Hallsonde den Stromwert erfasst. Die Versorgungsmesseinheit ist über eine Kommunikationsleitung mit der Schalteinheit und/oder der Logikeinheit verbunden. In Abhängigkeit von dem gemessenen Strom in der Versorgungsleitung wird
- ein Null-Puls oder
- ein Last-Puls veranlasst.

Ferner wird ein Verfahren zum Betrieb eines mit einem PSE verbundenen PD in einem Netzwerk beschrieben, wobei das PD Folgendes umfasst:
- einen Koppler, über welches es mit einem PSE verbunden ist,
- eine Versorgungsleitung, über welche die elektronischen Bauteile versorgt werden,
- eine Logikeinheit, über welche das PD mit dem PSE kommuniziert,
- mindestens zwei Eingangskanäle.

Hierbei wird der Sicherheitszustand über die folgenden mindestens zwei Sicherheitskanäle, dem Versorgungssicherheitskanal und dem

Kommunikationssicherheitskanal, mit jeweils eigenen Teilzuständen erreicht:
- der erste Teilzustand des Versorgungssicherheitskanals besteht darin, dass für einen ersten Eingangskanal während eines Null-Pulses oder eines Last-Pulses in der Versorgungsleitung ein Wert als digitale Information der Versorgung, insb. der Stromstärke oder der Stromfluss, in einer Versorgungsleitung des PD an das PSE übertragen wird, und parallel
- der zweite Teilzustand des Kommunikationssicherheitskanals besteht darin, dass die Identität der Daten, das heißt, ob ein sicherer (Teil-)Zustand vorliegt oder nicht, von mindestens einem weiteren Eingangskanal über die Logikeinheit an den Koppler übertragen wird, wobei
   i) parallel zum oder durch den Null-Puls mindestens die Logikeinheit von der Versorgungsleitung getrennt wird und die Logikeinheit über einen Versorgungsspeicher des PD für die Dauer der Trennung (Null-Puls) versorgt wird oder
   ii) parallel zum Last-Puls die Spannung stromaufwärts der Logikeinheit von einer ersten höherer Spannung auf eine zweite niedrigere Spannung gewandelt wird.

Die Logikeinheit ist hierbei in einem Versorgungszweig eingebunden, der über eine Schalteinheit mit der Versorgungsleitung verbunden ist.

Hierbei meint "parallel", dass etwas "zeitgleich" oder "nahezu zeitgleich" erfolgt, so dass bspw. die Erzeugung und Kommunikation des weiteren, sicheren Teilzustandes zeitgleich oder nahezu zeitgleich erfolgt.

Zur Vermeidung von Wiederholungen und aufgrund der technischen Nähe sollen vorliegend alle Vorteile, Aspekte und Ausführungen zu dem PD, dem PSE und/oder zu dem Netzwerk identisch oder in analoger Weise auch für das Verfahren gelten und umgekehrt.

Bei einem verbesserten Verfahren kann eine Erhöhung der Sicherheit darin bestehen, dass die Versorgungsleitung durch das PSE und die Schalteinheit des PD getrennt wird (Null-Puls).

Vorteilhafterweise wird der Null-Puls und/oder der Last-Puls durch mindestens eine Schalteinheit veranlasst und/oder gesteuert, wobei die Schalteinheit vorteilhafterweise in der Versorgungsleitung angeordnet ist.

Bei einer weiteren Variante des Verfahrens kann ein Vorteil darin bestehen, wenn der Versorgungsspeicher außerhalb eines Pulses oder eines Pulsmusters über die Versorgungsleitung geladen wird und durch die Schalteinheit von der Versorgungsleitung getrennt wird.

Somit besteht der besondere Vorteil darin, dass der sichere Eingang (Sicherheitszustand) über redundante, vollständig entkoppeltet Kanäle übermittelt wird. Dies ist ein Versorgungseingangskanal (Strom) und einen zweiten Kommunikationseingangskanal (Daten), die beide dieselbe bzw. analoge Information über einen sicheren Teilzustand des Eingangs an das PSE übermitteln und damit über insgesamt einen Sicherheitszustand.

Bei einer weiteren Variante des Verfahrens kann ein Vorteil darin bestehen, wenn zusätzlich oder alternativ in analoger Weise ein sicherer Ausgang über redundante Kanäle gebildet wird. Dies erfolgt indem in analoger Weise über einen ersten Versorgungsausgangskanal (Strom, erster Teilzustand) und einen zweiten Kommunikationsausgangskanal (Daten, zweiter Teilzustand). Die beiden Kanäle bekommen dieselbe Information über die Zu- oder Abschaltung des Ausgangs vom PSE übermittelt, d.h. die beiden Teilzustände der Eingangskanäle.

Bei einer weiteren Variante des Verfahrens kann ein Vorteil darin bestehen, wenn beim zweiten Teilzustand des Kommunikationssicherheitskanals parallel zum Null-Puls gemäß der Alternative i), die vom Versorgungsspeicher bereitgestellte Spannung stromaufwärts der Logikeinheit von einer ersten höherer Spannung auf eine zweite niedrigere Spannung gewandelt wird.

Bei einem verbesserten Verfahren kann vorgesehen werden, dass parallel zum Last-Puls beim ersten Teilzustand des Versorgungssicherheitskanals, mindestens eine der folgenden Schaltungen vorliegen:
- der erste Eingangskanal, auch Versorgungskanal genannt, ist mit dem PSE und der Versorgungsleitung stromleitend verbunden und/oder
- ein Ausgangskanal ist mit dem PSE und Versorgungsleitung stromleitend verbunden.

Auf diese Weise kann insbesondere einem nachfolgenden Bauteil über den Ausgang ein sicherer Zustand des PD übermittelt werden.

Bei einer weiteren Variante des Verfahrens kann ein Vorteil darin bestehen, wenn mittels der Schalteinheit als Puls getaktet das Vorliegen oder Nicht-Vorliegen eines Sicherheitszustandes (erster, zweiter Teilzustand) veranlasst und für die Logikeinheit und/oder das PSE erfasst wird. Hierbei kann vorteilhafterweise eine Pulsdauer 1 ms bis 50 ms betragen und eine Periodendauer 300 ms bis 800 ms betragen.

Bei einer vorteilhaften Ausführungsform beträgt die Periodendauer 500 ms.

Bei einer weiteren Variante des Verfahrens kann ein Vorteil darin bestehen, wenn die Logikeinheit nur für die Dauer der Trennung von der Versorgungsleitung durch die Schalteinheit über den Versorgungsspeicher versorgt wird. Hierbei kann eine Verbesserung darin bestehen, dass die Entnahme aus dem Versorgungspeicher zur Logikeinheit über ein Netzteil erfolgt, insbesondere einen Gleichstromrichter, so dass eine konstante Stromstärke oder Spannung bereitgestellt werden.

Bei einer weiteren Variante des Verfahrens kann ein Vorteil darin bestehen, wenn die vom Versorgungsspeicher bereitgestellte Versorgung und/oder der Gleichstrom derart ausgelegt ist, dass kein unsicherer Betrieb des Ausgangs ermöglicht ist, weil dies der erforderlichen Höhe (Größe) und/oder der minimalen (Versorgungs-)Dauer nach nicht möglich ist.

Hierbei kann eine Auslegung beispielsweise derart sein, dass für den Betrieb der Logikeinheit und der Eingangskanäle einen Strombedarf von 30 mA besteht. Hingegen ist der Strombedarf der PSE-Ports (Ausgang) beispielsweise 300 mA, also das 10-fache, so dass diese über die Versorgung durch die Versorgungseinheit auch im Stör- oder Fehlerfall nicht betrieben werden könnten.

Vorteilhafterweise sind die Schaltflanken der Versorgung auf einem definierten Stromwert durch die Versorgungseinheit derart ausgeführt und werden entsprechend träge geändert, so dass ein im Koppler angeordneter Tiefpassfilter (low-pass filter) und/oder ein entsprechender Filter des PSE passiert werden kann.

Bei einer vorteilhaften Variante des Verfahrens kann ein Vorteil darin bestehen, wenn das PD zur Verbindung mit einem PSE über eine Netzwerkleitung eines Netzwerkes nach einem der hierin genannten Varianten und Ausführungsformen ausgebildet ist.

Es zeigen:
- Fig. 1: ein PD in der Verschaltung mit einem PSE als Netzwerk,
- Fig. 2: ein PD in einer alternativen Verschaltung zur Figur 1,
- Fig. 3: ein PD in einer weiteren Verschaltung zur Figur 1 oder Figur 2,
- Fig. 4: eine erste Schaltpulsfolge über der Zeit als Grafik und
- Fig. 5: eine weitere Schaltpulsfolge über der Zeit als Grafik.

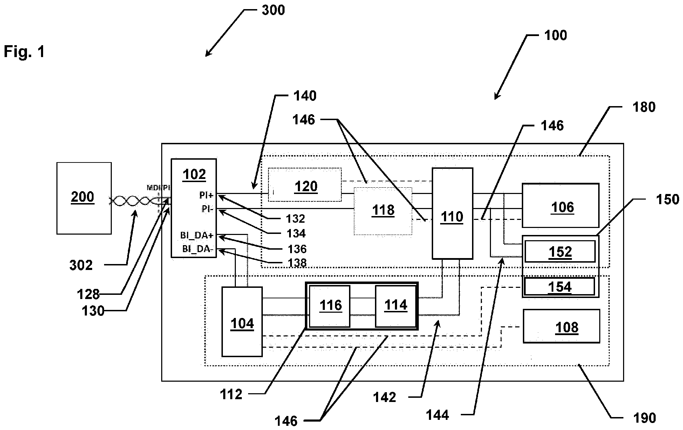

In der Figur 1 ist ein PD 100 gezeigt, das in ein Netzwerk 300 über ein Netzwerkkabel 302 mit einem PSE 200 verbunden ist. Das Netzwerk 300 ist ein SPE (Single Pair Ethernet) mit PoDL (Power over Data Line) und die Netzwerkleitung 302 ist ein zugehöriges zweiadriges Kabel, das entsprechend standardisiert ist.

Das PD 100 ist in der Figur 1 nur mit den für den sicheren Betrieb für die Kommunikation von sicheren Zustandsdaten dargestellt und kann weitere funktionale Bauteile aufweisen.

Das PD 100 weist als Verbindungsglied zum PSE 200 und Anschluss an die Netzwerkleitung 302 einen Koppler 102 auf, der zwei PSE-Ports 128, 130 zur Verbindung mit dem Netzwerkkabel 302 aufweist. Weiterhin weist der Koppler 102 zwei Leistungsports 132, 134 und zwei Kommunikationsports 136, 138 auf.

Über die Leistungsports 132, 134 ist die Versorgungsleitung 140 angeschlossen und über die Kommunikationsports 136, 138 ist eine Kommunikation mit einer Logikeinheit 104 hergestellt.

Weiterhin umfasst das PD 100 neben der Logikeinheit 104 zwei Eingangskanäle 106, 108 und eine Schalteinheit 110, die in der der Versorgungleitung 140 vom Koppler 102 zu dem ersten Versorgungseingangskanal 106 angeordnet ist. Weiterhin führt von der Schalteinheit 110 ein Versorgungszweig 142 zu der Logikeinheit 104 und in dem Versorgungszweig 142 ist eine Versorgungseinheit 112 mit einem Versorgungsspeicher 114 und einem Netzteil 116 in Reihe verbunden.

Das PD 100 umfasst zudem einen zweiten Kommunikationseingangskanal 108, einen Ausgangskanal 150 mit einem Versorgungsausgangskanal 152 und einen Kommunikationsausgangskanal 154. Der Ausgangskanal 150 ist über einen Abzweig 144 mit der Versorgungsleitung 140 verbunden, wobei die Verbindung des Abzweigs 144 über einen Knoten stromabwärts von der Schalteinheit 110 angeordnet ist. Weiterhin sind eine Lasteinheit 118 und eine Versorgungsmesseinheit 120 stromaufwärts zur Schalteinheit 110 in der Versorgungsleitung 140 angeordnet.

Die Logikeinheit 110 kann über weitere Kommunikationsleitungen 146 mit allen Bauteilen verbunden sein, um deren Zustand oder relevante Betriebs- und/oder Leistungsdaten zu erfassen, die für die Sicherheitsfunktion nicht relevant oder nachgeordnet sind. Diese sind aus Gründen der Übersichtlichkeit nicht eingezeichnet. Hierzu umfasst die Logikeinheit weitere, nicht sicherheitsrelevante digitale oder analoge Eingänge, Ausgänge oder sonstige funktionale Blöcke, die in den Figuren nicht dargestellt sind.

Über Kommunikationsleitungen 146 ist die Schalteinheit 110 mit dem Versorgungseingangskanal 106, der Lasteinheit 118 und der Versorgungsmesseinheit 120 verbunden, wobei die Lasteinheit 118 vorliegend ein Widerstand oder eine Widerstandsgruppe ist und die Versorgungsmesseinheit 120 ein Shunt-Widerstandssensor.

Die Logikeinheit 104 ist über Kommunikationsleitungen 146 mit dem Kommunikationseingangskanal 108 verbunden und weiterhin neben der Verbindung mit dem Koppler 102 mit dem Kommunikationsausgangskanal 154.

Wird von der Schalteinheit 110 ein aktiver Versorgungseingangskanal 106 erkannt, schaltet die Schalteinheit 110 in Abhängigkeit von der definierten Schaltperiode von vorliegend 500 ms für eine Puls (Pulsdauer) von 25 ms und trennt damit die Logikeinheit 104 und den Versorgungseingangskanal 106 von der Versorgungsleitung 140.

Für die Dauer des Pulses erfasst die Logikeinheit 104 weiterhin den Teilzustand und ggf. Identität) des Kommunikationseingangskanals 108 und wird zur Weiterleitung dieser Information über die (mögliche) Identität des sicheren Eingangs von der Versorgungseinheit 112 mit Spannung versorgt. Die von dem Versorgungsspeicher 114, einer Kondensatorgruppe, kommende Spannung wird mittels dem Netzteil 116 auf einen definierten Wert gesenkt, wobei die Kondensatoren nach dem Puls aus der Versorgungsleitung 140 erneut aufgeladen werden.

Diese Leistungssenkung ist im PSE 200 erfassbar, da für die Dauer des Pulses der Strom angeschaltet ist. Das stellt ein zusätzliches Sicherheitsmerkmal dar.

Im abgeschalteten sicheren Zustand bildet sich somit ein erster Sicherheitskanals Versorgungssicherheitskanal 180, der die Schalteinheit 110, die optionale Lasteinheit 118 und die optionale Versorgungsmesseinheit 120 umfasst sowie den schaltbaren Versorgungseingangskanal 106.

Hiervon vollständig unabhängig ist ein zweiter Sicherheitskanal, der als Kommunikationssicherheitskanal 190 ausgebildet ist, der eine eigenständige Versorgungseinheit 112 für die Logikeinheit 104 und den Kommunikationseingangskanal 108 mit den zugehörigen Kommunikationsleitungen 146 umfasst sowie zusätzlich den optionalen Kommunikationsausgangskanal 154 mit der zugehörigen Kommunikationsleitung 146 zur Logikeinheit 104.

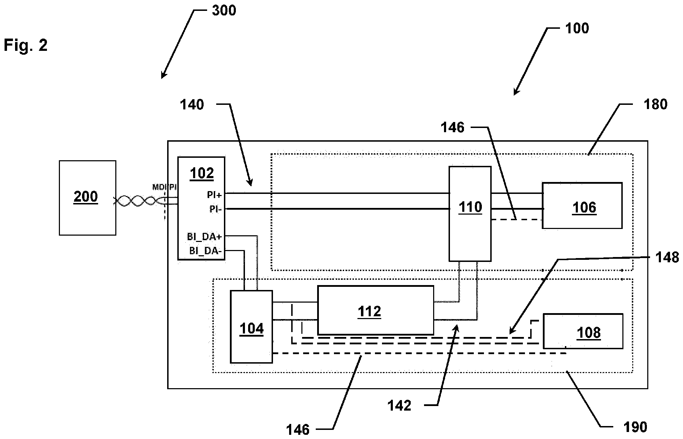

Figur 2 zeigt eine alternative Ausführungsform, wobei insgesamt alle Bezugszeichen die identische Bedeutung behalten und nicht immer erneut genannt und erläutert werden. Bei dieser Ausführungsform umfasst das PD 100 einen Koppler 102 und eine über die Versorgungsleitung 140 direkt verbundene Schalteinheit 110, die wiederum mit dem Versorgungseingangskanal 106 verbunden ist. Mit der Versorgungsleitung 140 ist die Logikeinheit 104 über die Schalteinheit 110 identisch zur Figur 1 verbunden. Bei der gezeigten Ausführungsform ist der Kommunikationseingangskanal 108 zur Signalverstärkung stromabwärts zur Versorgungseinheit 112 über einen Knoten und einen Abzweig 148 mit dem Versorgungszweig 142 verbunden. Die Versorgungseinheit 112 und insbesondere der Versorgungsspeicher 114 sind in diesem Falle so konfiguriert, dass eine Signalverstärkung ermöglicht wird. Bei einem nicht gezeigten Ausführungsbeispiel ist auch oder alternativ ein analoger Abzweig 148 zu dem Versorgungseingangskanal 106 vorgesehen. Analog zur Figur 1 kann das PD 100 insbesondere einen Ausgangskanal 150 oder weitere Eingangskanäle aufweisen.

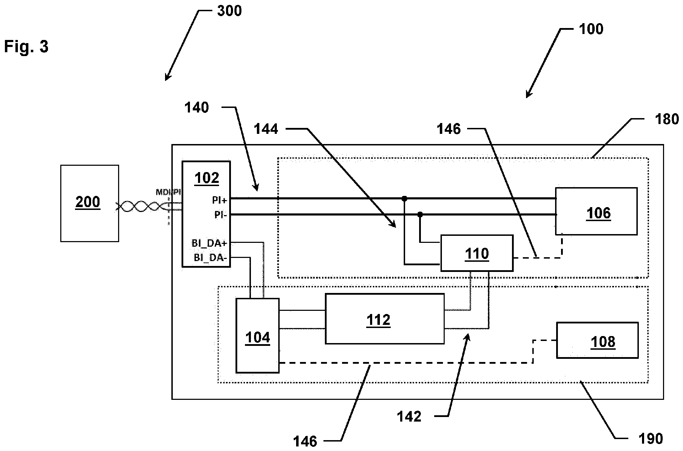

Bei der Ausführungsform, wie sie in der Figur 3 gezeigt ist, ist das Schaltelement 110 nicht in der Versorgungsleitung 140, sondern nach einem Knoten in den Abzweig 144 eingebunden.

Somit ist von einer Abschaltung des Schaltelementes 110 der Versorgungseingangskanal 106 nicht betroffen und es kann nur der Versorgungszweig 142 zur Versorgung der Logikeinheit 104 weggeschaltet werden.

Dieser wird in analoger Weise durch die Versorgungseinheit 112 während eines Null-Pulses weiter versorgt. Der unsichere oder sichere Zustand der beiden Eingangskanäle 106, 108 wird wie bei der Ausführung nach Figur 1 redundant an das PSE 200 über die jeweiligen Sicherheitskanäle 180, 190 übertragen. Den Versorgungssicherheitskanal 180 bildet der Versorgungseingangskanal 106, der nur vom PSE 200 gesteuerten abgeschaltet werden kann und der dortig erfasste Teilzustand. Den Kommunikationssicherheitskanal 190 bildet der der Kommunikationseingangskanal 108, die Versorgungseinheit 112 und die Logikeinheit 104 und der dortig erfasste Zustand über ein Protokoll der Logikeinheit 104.

Bei einer nicht dargestellten Ausführungsvariante kann zur Erhöhung der Sicherheit im Versorgungskanal 180 in der Versorgungsleitung 140 eine Versorgungsmesseinheit 120 vorgesehen sein, die über eine Kommunikationsleitung mit der Logikeinheit 104 verbunden ist, insbesondere über eine galvanisch getrennte Kommunikationsleitung. Somit kann der erfasste Zustand der Versorgungsleitung 140 ergänzend über die Logikeinheit 104 und den Koppler 102 an das PSE 200 übermittelt werden.

Analog zur Figur 1 kann das PD 100 insbesondere einen Ausgangskanal 150 oder weitere Eingangskanäle aufweisen.

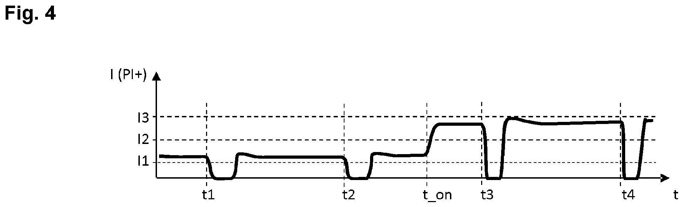

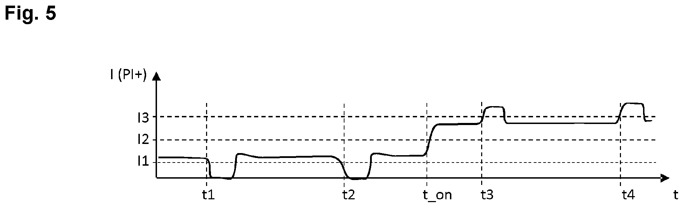

In den Figuren 4 und 5 sind in jeweils einem Graphen der Stromverbrauch (y-Achse) über der Zeit (x-Achse) aufgetragen, wie er in der Versorgungsleitung 140 vorliegt, der von dem PSE 200 erfassbar ist.

In der Figur 4 ist dargestellt, wie bei einem Puls (Null-Puls) durch die Schalteinheit 110 zu den Zeitpunkten t1 bis t4 jeweils die Stromversorgung in der Versorgungsleitung 140 für eine definierte Pulsdauer abgeschaltet wird. Der sichere Eingang und der sichere Ausgang im Versorgungssicherheitskanal 180 werden während des Pulses nicht mit Spannung versorgt. Dieser Puls kann dazu genutzt werden, um den Kommunikationseingangskanal 108 vom sicheren Versorgungseingangskanal 106 im Fall eines Querschlusses zwischen den beiden Eingangskanälen 106, 108 zu unterscheiden. Der Puls durch die Schalteinheit 110 kann außerdem dazu dienen, den sicheren Ausgang durch Abschaltung zyklisch auf seine Abschaltfähigkeit zu testen.

Bei dem Ausführungsbeispiel der Verfahrens nach Figur 5 ist eine einstellbare Lasteinheit 118 und eine Versorgungsmesseinheit 120, in Form einer Strommesseinheit, vorgesehen. Im Falle eines hohen Stromverbrauchs, wie zu den Zeitpunkten t3 und t4, ist die Leistung nicht begrenzt und der Ausgang zum PSE ist offen. In diesem Fall kann es vorteilhaft sein, wenn die Versorgungsleitung 140 durch die Schalteinheit 110 nicht getrennt wird, sondern statt des Pulses (Null-Puls) ein Last-Puls generiert wird, der ebenfalls als definierter Stromwert für den sicheren Zustand des Eingangs gewertet wird.

Diese Ausführungsform des Verfahrens hat den Vorteil und die Auswirkung, dass der sichere Eingang und der sichere Ausgang im Versorgungssicherheitskanal während des Last-Pulses weiter mit Spannung versorgt werden.

Mit der vorliegenden Erfindung ist es somit möglich geworden, dass bei einem PD, wie einer Sensor-Aktor-Einheit oder einer Eingangs-Ausgangs-Kombination, der Sicherheitszustand (Sicherheitshinweis) in Richtung vom PSE zum PD und vom PD zum PSE übertragen werden kann, auch wenn die Leistung durch das PSE bereits sicher begrenzt worden ist. Dies erfolgt, indem die Logikeinheit während der Übertragung des Sicherheitszustandes (Sicherheitshinweis) weiter betrieben werden kann, indem das PD mindestens einen internen Versorgungsspeicher als Pufferelement aufweist, das zur Überbrückung des Pulses (Null-Puls) benötigt wird.

### Bezugszeichenliste

- 100: PD (Powered Device)
- 102: Koppler
- 104: Logikeinheit
- 106: Versorgungseingangskanal
- 108: Kommunikationseingangskanal
- 110: Schalteinheit
- 112: Versorgungseinheit
- 114: Versorgungsspeicher
- 116: Netzteil
- 118: Lasteinheit
- 120: Versorgungsmesseinheit

- 128: PSE-Port
- 130: PSE-Port
- 132: Leistungsport (PD)
- 134: Leistungsport (PD)
- 136: Kommunikationsport (PD)
- 138: Kommunikationsport (PD)
- 140: Versorgungsleitung
- 142: Versorgungszweig
- 144: Abzweig
- 146: Kommunikationsleitung
- 148: Abzweig

- 150: Ausgangskanal
- 152: Versorgungsausgangskanal
- 154: Kommunikationsausgangskanal

- 180: Versorgungssicherheitskanal (erster Sicherheitskanal)

- 190: Kommunikationssicherheitskanal (zweiter Sicherheitskanal)

- 200: PSE (Power Source Equipment)
- 300: Netzwerk (SPE)
- 302: Netzwerkleitung

## Patentansprüche

1. Powered Device (100) zur Verbindung mit einem Power Sourcing Equipment (200) über eine Netzwerkleitung (302) eines Netzwerkes (300), aufweisend als elektronische Bauteile
- einen Koppler (102) zur Verbindung mit dem PSE (200) und zur Trennung von über die Netzwerkleitung (302) empfangene Versorgung und Kommunikation,
- mindestens eine Logikeinheit (104) und mindestens zwei Eingangskanäle (106, 108), wobei der Koppler (102) zwei PSE-Ports (128, 130) und mindestens vier PD-Ports (132, 134, 136, 138) aufweist, wovon mindestens zwei PD-Ports Leistungsports (132, 134) darstellen und mindestens zwei PD-Ports Kommunikationsports (136, 138) darstellen, und wobei die elektronischen Bauteile über die zwei Leistungsports (132, 134) und eine Versorgungsleitung (140) direkt oder mittelbar versorgt werden, **dadurch gekennzeichnet, dass** eine Schalteinheit (110) in der Versorgungleitung (140) vom Koppler (102) zu dem mindestens einen Eingangskanal (106) angeordnet ist und von der Schalteinheit (110) ein Versorgungszweig (142) zu der Logikeinheit (104) führt, wobei die Logikeinheit (104) einen Versorgungsspeicher (114) umfasst und/oder hiermit verbunden ist.

2. Vorrichtung nach Anspruch 1, **dadurch gekennzeichnet, dass** die Schalteinheit (110) ausgebildet ist, um mindestens eine Zeitlang (dt) einen oder mehrere Pulse und/oder ein charakteristisches Pulsmuster zu veranlassen, erfassbar für mindestens die Logikeinheit (104) und/oder das versorgende PSE (200).

3. Vorrichtung nach Anspruch 1 oder 2, **dadurch gekennzeichnet, dass** in dem Versorgungszweig (142) eine Versorgungseinheit (112) angeordnet ist, die mindestens einen Versorgungsspeicher (114) und ein Netzteil (116) umfasst.

4. Vorrichtung nach einem der vorherigen Ansprüche, **dadurch gekennzeichnet, dass** der Versorgungsspeicher (114) mindestens ein passives Speicherbauteil und mindestens eine passives Richtungsbauteil umfasst, wobei das Speicherbauteil beispielsweise eine Kapazität und/oder eine Induktivität ist und das mindestens eine Richtungsbauteil beispielsweise eine Diode ist.

5. Vorrichtung nach einem der vorherigen Ansprüche, **dadurch gekennzeichnet, dass** der Versorgungsspeicher (114) derart ausgebildet und dimensioniert ist, dass die bereitstellbare Versorgung der Höhe (Größe) und/oder der Dauer nach keinen Betrieb eines Ausgangs ermöglicht.

6. Vorrichtung nach einem der vorherigen Ansprüche, **dadurch gekennzeichnet, dass** in der Versorgungsleitung (140) zwischen dem Koppler (102) und der Schalteinheit (110) eine Lasteinheit (118) vorgesehen ist, wobei die Lasteinheit (118) insbesondere mit der Schalteinheit (110) kommuniziert.

7. Vorrichtung nach einem der vorherigen Ansprüche, **dadurch gekennzeichnet, dass** in der Versorgungsleitung (140) eine Versorgungsmesseinheit (120) vorgesehen ist, die mit der Schalteinheit (110) und/oder der Logikeinheit (104) kommuniziert, wobei die Schalteinheit (110) ausgelegt sein kann, in Abhängigkeit von dem durch die Versorgungsmesseinheit (120) erfassten Versorgungswert einen Puls zu erzeugen.

## Claims

1. Powered device (100) for connection to a power sourcing equipment (200) via a network line (302) of a network (300), having the following as electronic components:
- a coupler (102) for connection to the PSE (200) and for disconnecting power supply and communication received via the network line (302),
- at least one logic unit (104) and at least two input channels (106, 108), wherein the coupler (102) has two PSE ports (128, 130) and at least four PD ports (132, 134, 136, 138), of which at least two PD ports are power ports (132, 134) and at least two PD ports are communication ports (136, 138), and wherein the electronic components are supplied with power directly or indirectly via the two power ports (132, 134) and a supply line (140), **characterized in that** a switching unit (110) is arranged in the supply line (140) from the coupler (102) to the at least one input channel (106) and a supply branch (142) leads from the switching unit (110) to the logic unit (104), wherein the logic unit (104) comprises and/or is connected to a supply store (114).

2. Device according to Claim 1, **characterized in that** the switching unit (110) is designed to cause one or more pulses and/or a characteristic pulse pattern at least for a time (dt), in a manner able to be detected by at least the logic unit (104) and/or the power-supplying PSE (200).

3. Device according to Claim 1 or 2, **characterized in that** a supply unit (112) is arranged in the supply branch (142) and comprises at least a supply store (114) and a power supply unit (116).

4. Device according to one of the preceding claims, **characterized in that** the supply store (114) comprises at least one passive storage component and at least one passive directional component, wherein the storage component is for example a capacitance and/or an inductance and the at least one directional component is for example a diode.

5. Device according to one of the preceding claims, **characterized in that** the supply store (114) is designed and dimensioned such that the power supply able to be provided, in terms of level (magnitude) and/or duration, does not enable operation of an output.

6. Device according to one of the preceding claims, **characterized in that** a load unit (118) is provided in the supply line (140) between the coupler (102) and the switching unit (110), wherein the load unit (118) communicates in particular with the switching unit (110).

7. Device according to one of the preceding claims, **characterized in that** a supply measurement unit (120) is provided in the supply line (140) and communicates with the switching unit (110) and/or the logic unit (104), wherein the switching unit (110) may be designed to generate a pulse depending on the supply value recorded by the supply measurement unit (120).

## Revendications

1. Dispositif alimenté (Powered Device, PD) (100) destiné à être relié à un équipement d'alimentation électrique (Power Sourcing Equipment, PSE) (200) par l'intermédiaire d'une ligne de réseau (302) d'un réseau (300), comprenant, en tant que composants électroniques,
- un coupleur (102) destiné à être relié au PSE (200) et à séparer l'alimentation et la communication reçues par l'intermédiaire de la ligne de réseau (302),
- au moins une unité logique (104) et au moins deux canaux d'entrée (106, 108), le coupleur (102) comprenant deux ports PSE (128, 130) et au moins quatre ports PD (132, 134, 136, 138), parmi lesquels au moins deux ports PD constituent des ports de puissance (132, 134) et au moins deux ports PD constituent des ports de communication (136, 138), et les composants électroniques étant alimentés directement ou indirectement par l'intermédiaire des deux ports de puissance (132, 134) et d'une ligne d'alimentation (140), **caractérisé en ce qu'**une unité de commutation (110) est disposée dans la ligne d'alimentation (140) entre le coupleur (102) et l'au moins un canal d'entrée (106), et une branche d'alimentation (142) s'étend de l'unité de commutation (110) vers l'unité logique (104), l'unité logique (104) comprenant une mémoire d'alimentation (114) et/ou étant reliée à celle-ci.

2. Dispositif selon la revendication 1, **caractérisé en ce que** l'unité de commutation (110) est conçue pour provoquer, pendant au moins une durée (dt), une ou plusieurs impulsions et/ou un motif d'impulsions caractéristique, pouvant être détecté par au moins l'unité logique (104) et/ou le PSE (200) assurant l'alimentation.

3. Dispositif selon la revendication 1 ou 2, **caractérisé en ce qu'**une unité d'alimentation (112) est disposée dans la branche d'alimentation (142), laquelle comprenant au moins une mémoire d'alimentation (114) et un bloc d'alimentation (116).

4. Dispositif selon l'une quelconque des revendications précédentes, **caractérisé en ce que** la mémoire d'alimentation (114) comprend au moins un composant de stockage passif et au moins un composant de direction passif, le composant de stockage étant, par exemple, une capacité et/ou une inductance, et l'au moins un composant de direction étant, par exemple, une diode.

5. Dispositif selon l'une quelconque des revendications précédentes, **caractérisé en ce que** la mémoire d'alimentation (114) est conçue et dimensionnée de telle sorte que l'alimentation pouvant être fournie, du fait de son niveau (grandeur) et/ou de sa durée, ne permet le fonctionnement d'aucune sortie.

6. Dispositif selon l'une quelconque des revendications précédentes, **caractérisé en ce qu'**une unité de charge (118) est prévue dans la ligne d'alimentation (140) entre le coupleur (102) et l'unité de commutation (110), l'unité de charge (118) communiquant notamment avec l'unité de commutation (110).

7. Dispositif selon l'une quelconque des revendications précédentes, **caractérisé en ce qu'**une unité de mesure d'alimentation (120) est prévue dans la ligne d'alimentation (140), laquelle communiquant avec l'unité de commutation (110) et/ou l'unité logique (104), l'unité de commutation (110) pouvant être conçue pour générer une impulsion en fonction de la valeur d'alimentation détectée par l'unité de mesure d'alimentation (120).
